## Europäisches Patentamt

## European Patent Office

## Office européen des brevets

(19)

(11) Veröffentlichungsnummer: **0 217 075**
**B1**

(12) **EUROPÄISCHE PATENTSCHRIFT**

(45) Veröffentlichungstag der Patentschrift:
27.09.89

(21) Anmeldenummer: **86110901.5**

(22) Anmeldetag: **07.08.86**

(51) Int. Cl.⁴: **B 62 D 53/06,** B 62 D 21/12,
B 60 P 1/64

(54) Container-Sattelauflieger.

(30) Priorität: **31.08.85 DE 3531179**

(43) Veröffentlichungstag der Anmeldung:
**08.04.87 Patentblatt 87/15**

(45) Bekanntmachung des Hinweises auf die Patenterteilung:
**27.09.89 Patentblatt 89/39**

(84) Benannte Vertragsstaaten:
**AT BE DE FR GB IT NL SE**

(56) Entgegenhaltungen:
**DE-B- 1 242 510**
**US-A- 3 913 933**
**US-A- 4 496 187**

(73) Patentinhaber: **Maschinenfabriken Bernard Krone GmbH, Heinrich-Krone-Strasse 10, D-4441 Spelle (DE)**

(72) Erfinder: **Berner, Klaus, Feldhäuserstrasse 85, D-2804 Lilienthal (DE)**
Erfinder: **Focks, Hubert, Erlenweg 36, D-4450 Lingen (DE)**

(74) Vertreter: **Busse & Busse Patentanwälte, Postfach 1226 Grosshandelsring 6, D-4500 Osnabrück (DE)**

## Beschreibung

Die Erfindung bezieht sich auf einen Sattelauflieger für Container gemäß dem Oberbegriff des Anspruchs 1.

Sattelauflieger dieser Art dienen zum Transport eines einzelnen Containers von entweder 12m (40 Fuß) oder 6 m (20 Fuß) Länge oder zum Transport zwei hintereinander angeordneten Containern von je 6 m (20 Fuß) Länge. Hierzu ist der Sattelauflieger mit fest auf dessen Längsrahmenstreben angebrachten Querholmen versehen, die jeweils paarweise einen Container an dessen vorderen bzw. rückwärtigen Ende abstützen. Insgesamt umfaßt ein Sattelauflieger sechs Querholme, die drei Querholmpaare bilden. Ein erstes Querholmpaar stützt beim Transport von zwei hintereinander angeordneten 6m-Containern den vorderen und ein zweites Querholmpaar den hinteren Container ab. Das dritte Querholmpaar dient zur Abstützung eines 6m-Containers bei dessen Einzeltransport und gibt disem eine vorverlegte, etwa mittlere Stellung vor, bei der die Lastverteilung etwa jener entspricht, die bei dem Transport eines 12m-Containers vorliegt. Bei dem Transport eines 12m-Containers werden der in Fahrtrichtung vordere Querholm des ersten Querholmpaares und der in Fahrtrichtung hintere Querholm des zweiten Querholmpaares für die Containerabstützung benutzt.

Es ist ferner ein Sattelauflieger für Container bekannt (DE-A-1 913 576), der auf Längsrahmenstreben angeordnete Querholme zur verriegelbaren endseitigen Abstützung eines Containers aufweist. Dabei ist ein vorderer Querholm vorgesehen, der am vorderen Ende der Längsrahmenstreben ortsfest mit diesen verbunden ist und zur Abstützung eines jeden aufzunehmenden Containers an dessen vorderen Ende dient. Die Abstützung des Containers an seinem rückwärtigen Ende erfolgt wahlweise durch einen von zwei Querholmen, die in Längsrichtung der Längsrahmenstreben im Abstand parallel zueinander angeordnet und auf einem in und entgegen Fahrtrichtung verfahrbaren Schlitten angebracht sind. Die Längsrahmenstreben sind ferner zweigeteilt und in ihrer Längsrichtung teleskopisch ausziehbar, wobei die rückwärtige Radachse(n) an den rückwärtigen, verschieblichen Teilen der Längsrahmenstreben befestigt ist bzw. sind.

Eine derartige Ausbildung eines Sattelaufliegers ermöglicht es, mit nur drei Querholmen eine Einzelcontainerabstützung von Containern unterschiedlichster Längen vorzunehmen, wobei jeder abgestützte Container mit seinem vorderen Ende stets ein und dieselbe Lage zum Sattelauflieger einnimmt. Die Ausziehbarkeit der Längsrahmenstreben ermöglicht es zusätzlich, den Abstand zwischen der vorderen und der oder den rückwärtigen Radachse(n) den diesbezüglich unterschiedlichen Vorschriften in den verschiedenen Ländern anzupassen.

Der Erfindung liegt die Aufgabe zugrunde, einen Sattelauflieger der im Oberbegriff des Anspruchs 1 angegebenen Art zu schaffen, der eine geringere Zahl von Querholmen aufweist und eine leichtere Be- bzw. Entlademöglichkeit für einen zum Einzeltransport auf den Sattelauflieger aufgesetzten 6m-Container bietet.

Die Erfindung löst diese Aufgabe bei einem Sattelauflieger gemäß dem Oberbegriff des Anspruchs 1 mit den im kennzeichnenden Teil des Anspruchs 1 angegebenen Merkmalen. Hinsichtlich weiterer Ausgestaltungen wird auf die Ansprüche 2 bis 8 verwiesen.

Durch die bewegliche Ausgestaltung des bei Hintereinanderanordnung von zwei Containern den rückwärtigen Container abstützenden Querholmpaares kann dieses unter Fortfall eines gesonderten dritten Querholmpaares zur Abstützung eines 6m-Containers in vorverlegter Einzeltransportstellung herangezogen werden, und es besteht die Möglichkeit, den einzeln zu transportierenden 6m-Container aus seiner vorverlegten Einzeltransportstellung in eine Be- bzw. Entladestellung auf dem Sattelauflieger zu verschieben, in der das rückwärtige Containerende mit dem rückwärtigen Ende des Sattelaufliegers zusammenfällt.

Weitere Vorteile und Einzelheiten ergeben sich aus der nachfolgenden Beschreibung und der Zeichnung eines Ausführungsbeispieles des Gegenstands der Erfindung. In der Zeichnung zeigen:

Fig. 1 eine schematische Seitenansicht eines Sattelaufliegers nach der Erfindung mit einem 6m-Container in vorverlegter Einzeltransport-Stellung,

Fig. 2 eine Seitenansicht ähnlich Fig. 1 zur Veranschaulichung des Sattelaufliegers nach der Erfindung mit zwei hintereinander auf diesem angeordneten 6m-Containern,

Fig. 3 eine schematische Halbdraufsicht auf den Sattelauflieger nach Fig. 2 nach Abnahme der beiden 6m-Container,

Fig. 4 eine vergrößerte Seitenansicht des Ausschnitts IV in Fig. 1,

Fig. 5 eine vergrößerte Seitenansicht des Ausschnitts V in Fig. 2,

Fig. 6 eine Draufsicht auf die Ausschnittsdarstellung in Fig. 5,

Fig. 7 eine abgebrochene Seitenansicht der erfindungsgemäß als Teil eines Schlittens zusammengefaßten beweglichen Querholmes, und

Fig. 8 eine schematische Halbdraufsicht zu Fig. 7.

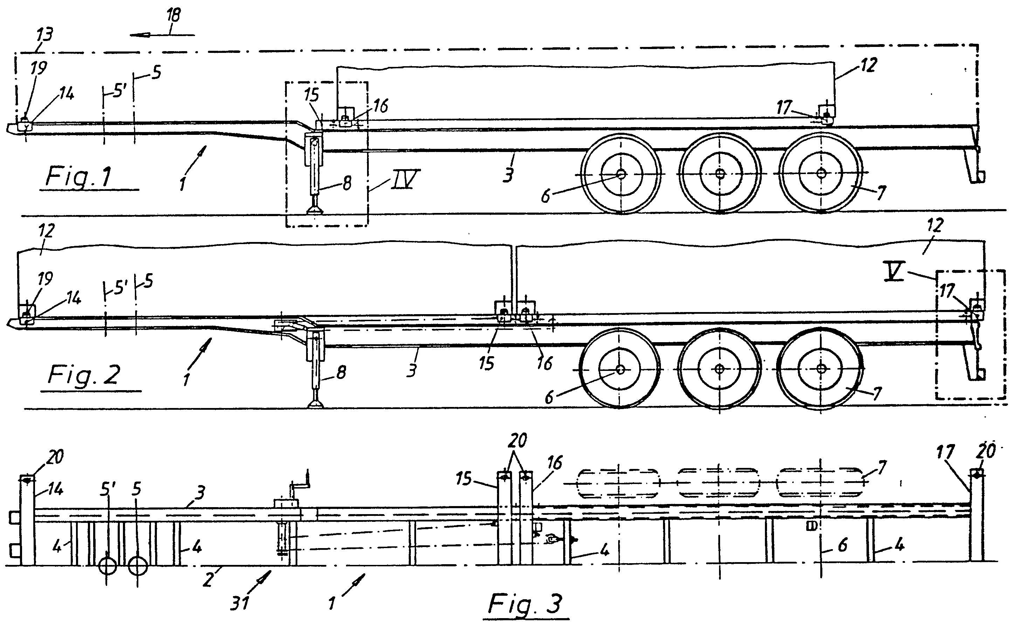

Der in seiner Gesamtheit in den Fig. 1 bis 3 veranschaulichte Sattelauflieger 1 besteht im wesentlichen aus zwei durchgehenden, beidseits einer Längsmittellinie 2 angeordneten Längsrahmenstreben 3, die durch Querrahmenstreben 4 zu einer Baueinheit verbunden sind. Im vorderen Bereich des Sattelaufliegers 1 befindet sich der aufliegerseitige Anschluß- bzw. Kupplungsteil 5,5' der üblicherweise ein Drehkipplager bildenden Aufsattelvorrichtung. Bei 5 bzw. 5' sind zwei verschiedene Stellungen für einen aufliegerseitigen Kupplungszapfen veranschaulicht.

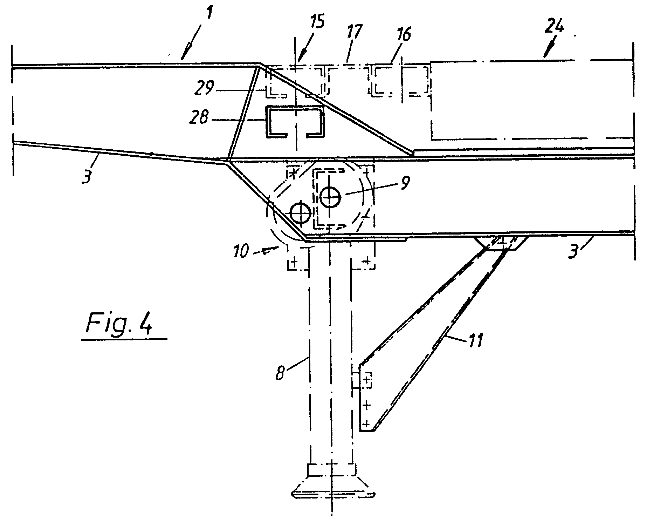

An den Längsrahmenstreben 3 sind im rückwärtigen Bereich die Achsabstützungen für drei Laufradachsen 6 angebracht, die Laufräder 7 tragen. In von einem Zugfahrzeug abgekuppelter Stellung stützt sich der Sattelauflieger 1 in seinem vorderen Bereich über eine Klappstütze 8 auf dem Boden ab, die um eine Klappachse 9 klappbar über eine Schwenklagervorrichtung 10 an den Längsrahmenstreben 3 abgestützt ist. Die Klappstütze 8 ist in Stützstellung (Fig. 4) über eine Strebe 11 und in hochgeklappter, annähernd horizontaler Nichtgebrauchsstellung über nicht näher veranschaulichte Verriegelungsmittel arretierbar.

Der Sattelauflieger 1 dient zum wahlweisen Transport unterschiedlicher Container. Fig. 1 veranschaulicht den Sattelauflieger 1 mit einem 6 m (20 Fuß) langen Container 12 in seiner Einzeltransportstellung, in der dieser Container 12 eine etwa mittige Lage auf dem Sattelauflieger 1 einnimmt. Die Fig. 2 veranschaulicht zwei 6m-Container 12 in Hintereinanderanordnung auf dem Sattelauflieger 1. Als dritte Möglichkeit kann der Sattelauflieger 1 einen 12 m (40 Fuß) langen Container 13 aufnehmen, der in Fig. 1 nur durch eine strichpunktierte Linie angedeutet ist.

Zur endseitigen Abstützung der Container 12 bzw. 13 sind auf den Längsrahmenstreben 3 angeordnete Querholme 14, 15, 16 und 17 vorgesehen, von denen die beiden in Fahrtrichtung 18 des Sattelaufliegers 1 vorderen Querholme 14, 15 ein erstes und die beiden in Fahrtrichtung 18 rückwärtigen Querholme 16, 17 ein zweites Querholmpaar bilden. Das erste Querholmpaar 14, 15 stützt bei Transport von zwei hintereinander angeordneten 6m-Containern 12 den vorderen und das zweite Querholmpaar 16, 17 den rückwärtigen Container 12 jeweils an dessen vorderen bzw. hinteren Ende ab. Zur Sicherung der Container 12, 13 auf ihren jeweiligen Querholmen dienen bekannte Container-Verschlußorgane, die bei 19 schematisch angedeutet sind und in Verriegelungsöffnungen 20 an den Außenenden der Querholme 14, 15, 16, 17 eingreifen.

Die Querholme 16, 17 sind einzeln für sich oder wie dargestellt und bevorzugt gemeinschaftlich in und entgegen Fahrtrichtung 18 zwischen einer dem rückwärtigen Aufliegerende benachbarten ersten Betriebsstellung (Fig. 2 und 3) und einer in Fahrtrichtung 18 vorverlegten zweiten Betriebsstellung (Fig. 1) auf den Längsrahmenstreben 3 verschieb- und feststellbar abgestützt. Dementsprechend übernehmen die Querholme 16, 17 des zweiten Querholmpaares sowohl die Abstützung des rückwärtigen Containers 12 bei zu gemeinschaftlichem Transport hintereinander auf dem Sattelauflieger 1 angeordneten Containern 12, als auch in der zweiten Betriebsstellung die Abstützung eines 6m-Containers 12 in Einzeltransportstellung gemäss Fig. 1. Erwähnt sei in diesem Zusammenhang nur der Vollständigkeit halber, daß in der ersten Betriebsstellung der rückwärtige Querholm 17 des zweiten Querholmpaares zusammen mit dem vorderen Querholm 14 des ersten Querholmpaares die Abstützung eines 12m-Containers 13 übernehmen.

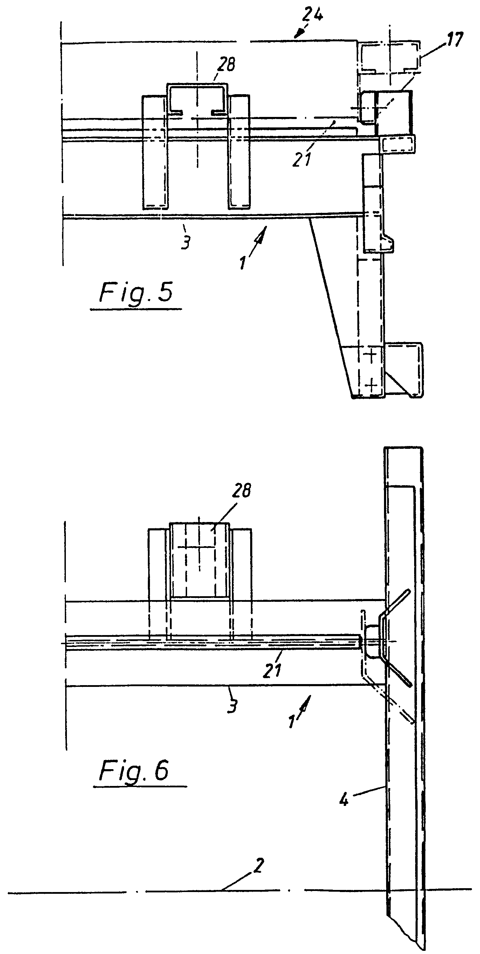

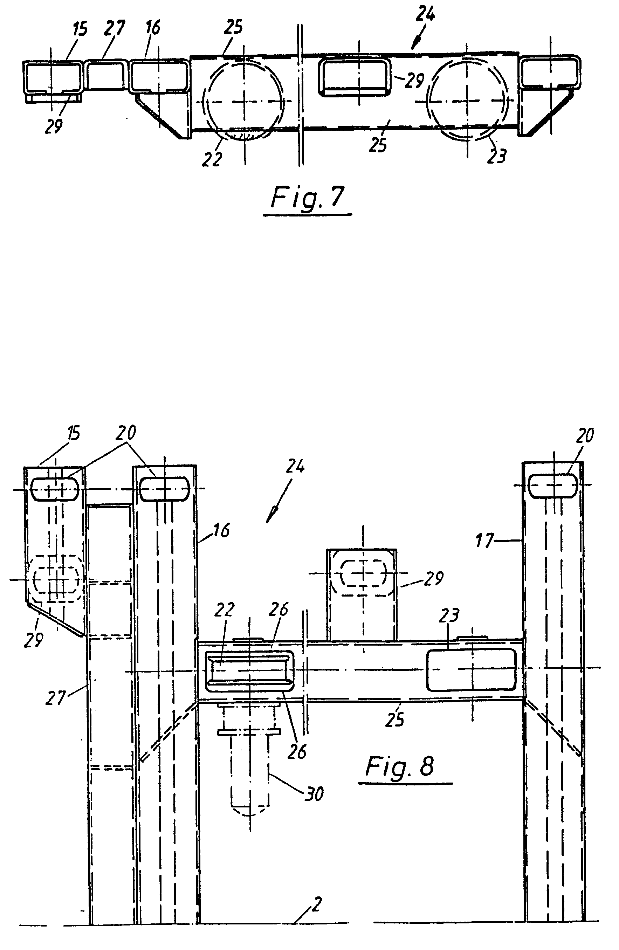

Eine bevorzugte Ausführung sieht vor, daß die beweglichen Querholme 16, 17, bei dem vorliegenden Ausführungsbeispiel auch der Querholm 15, Bestandteil eines auf Führungsschienen 21 (Fig. 5 und 6) auf den Längsrahmenstreben 3 mittels Rollen 22, 23 verfahrbar abgestützten Schlittens 24 bilden. Der Schlitten 24 umfaßt dabei die beweglichen Querholme 15, 16, 17 verbindende und tragende Längsstreben 25, in oder an denen die Stützrollen 22, 23 gelagert sind. Je zwei vordere Stützrollen 22 und zwei rückwärtige Stützrollen 23 bilden ein vorderes bzw. ein rückwärtiges Rollenpaar, und das Paar vorderer Stützrollen 22 ist dicht hinter dem Querholm 16 und das Paar Stützrollen 23 dicht vor dem Querholm 17 angeordnet. Die Stützrollen 22, 23 weisen seitliche Randflansche 26 (Fig. 8) auf, die in Zusammenwirken mit den ein Rechteckprofil darbietenden Führungsschienen 21 eine Seitenführung gewährleisten.

Der Querholm 15 ist über eine Distanz- und Verbindungsstrebe 27 mit dem Querholm 16 fest verbunden, so daß er bei einer Verschiebung des Schlittens 24 aus der ersten in die zweite Betriebsstellung mitgenommen wird. Auf diese Weise ist sichergestellt, daß trotz Anordnung sämtlicher Querholme 14, 15, 16, 17 in einer Ebene der Querholm 15 infolge seiner Mitnahme einer Verschiebung der Querholme 16, 17 in die zweite Betriebsstellung nicht im Wege steht. Der Querholm 15 könnte zwar fest mit den Längsrahmenstreben 3 verbunden sein, jedoch würde dies unerwünschte und nur mit erheblichem Aufwand behebbare Komplikationen beim Verschieben der Querholme 16, 17 bedingen, deren Beweglichkeit relativ zu den Querrahmenstreben an sich ausreicht.

Zur Feststellung des Schlittens 24 bzw. der Querholme 16, 17 in den beiden Betriebsstellungen können irgendwelche bekannten oder geeigneten Verriegelungsmittel Anwendung finden. Besonders einfach ist eine Verriegelung des Schlittens 24 mit den Längsrahmenstreben 3 mit Hilfe bekannter Container-Verschlußorgane, wie sie bei 19 für die Festlegung der Container an ihren Querholmen angedeutet sind. Für eine derartige Festlegung sind an den Längsrahmenstreben 3 Verriegelungsteile 28 fest angebracht, und auch der Schlitten 24 ist mit Riegelteilen 29 versehen, von denen ein Paar an den Längsstreben 25 befestigt und ein weiteres Paar in den Querholm 15 integriert ist. Die Verriegelungsteile 29 des Schlittens 24 liegen sowohl in der ersten als auch in der zweiten Betriebsstellung jeweils fluchtend über den Verriegelungsteilen 28 an den Längsrahmenstreben 3, so daß in beiden Betriebsstellungen die Feststellung mit Hilfe von Container-Verschlußorganen vorgenommen werden kann.

In entriegeltem Zustand ist der Schlitten 24 mittels eines bei 30 in Fig. 8 angedeuteten, auf eine der oder beide Stützrollen 22 wirkenden Antriebsmotor 30 verschiebbar. Statt dessen kann als Verschiebeantrieb auch eine Seilwinde 31 Anwendung finden, wie sie schematisch in Fig. 3 angedeutet ist.

Die Beweglichkeit der Querholme 16, 17, zwischen den beiden Betriebsstellungen erspart nicht nur ein drittes Paar Querholme, sondern ermöglicht insbesondere bei lagerichtigem Einzeltransport eines 6m-Containers 12 dessen leichte Be- und/oder Entladung in einer, der ersten Betriebsstellung der Querholme 16, 17 entsprechenden rückwärtigen Ladestellung, in der das rückwärtige Ende des Sattelaufliegers 1 mit dem rückwärtigen Ende des Containers 12 abschließt und nicht länger durch Überstehen, wie dies in der Einzeltransportstellung gemäß Fig. 1 der Fall ist, den Zugang zum rückwärtigen Ende des Containers 12 behindert.

Patentansprüche

1. Sattelauflieger (1) für Container (12, 13), mit auf Längsrahmenstreben (3) angeordneten Querholmpaaren (14, 15; 16, 17) zur verriegelbaren endseitigen Abstützung von wahlweise einem einzelnen Container (13) oder zwei hintereinander angeordneten Containern (12), dadurch gekennzeichnet, daß das bei Hintereinanderanordnung von zwei Containern (12) auf dem Sattelauflieger (1) den rückwärtigen Container (12) abstützende Querholmpaar (16, 17) zwischen einer dem rückwärtigen Aufliegerende benachbarten ersten Betriebsstellung und einer in Fahrtrichtung (18) vorverlegten zweiten Betriebsstellung in und entgegen Fahrtrichtung (18) auf den Längsrahmenstreben (3) verschieb- und feststellbar ist.

2. Sattelauflieger nach Anspruch 1, dadurch gekennzeichnet, daß der rückwärtige Querholm (15) des bei Hintereinanderanordnung von zwei Containern (12) auf dem Sattelauflieger (1) den vorderen Container (12) abstützenden Querholmpaares (14, 15) dem beweglichen Querholmpaar (16, 17) mitbeweglich zugeordnet ist.

3. Sattelauflieger nach Anspruch 1 oder 2, dadurch gekennzeichnet, daß die beweglichen Querholme (15, 16, 17) Bestandteil eines auf Führungsschienen (21) auf den Längsrahmenstreben (3) mittels Stützrollen (22, 23) zwischen den beiden Betriebsstellungen verfahrbar abgestützten Schlittens (24) bilden.

4. Sattelauflieger nach Anspruch 3, dadurch gekennzeichnet, daß an den Längsrahmenstreben (3) und am Schlitten (24) in beiden Betriebsstellungen jeweils in fluchtende Übereinanderlage gelangende, durch Container-Verschlußorgane miteinander verbindbare Verriegelungsteile (28, 29) vorgesehen sind.

5. Sattelauflieger nach Anspruch 4, dadurch gekennzeichnet, daß jedem der beiden Querholme (16, 17) des beweglichen Querholmpaares ein Paar Verriegelungsteile (29) fahrtrichtungsseitig vorgeordnet ist.

6. Sattelauflieger nach einem oder mehreren der Ansprüche 3 bis 5, dadurch gekennzeichnet, daß der Schlitten (24) die bewegliche Querholme (15, 16, 17) verbindende und tragende Längsstreben (25) aufweist, an oder in denen nahe den Querholmen (16, 17) die ein vorderes bzw. rückwärtiges Rollenpaar bildende Stützrollen (22, 23) gelagert sind.

7. Sattelauflieger nach einem oder mehreren der Ansprüche 1 bis 6, dadurch gekennzeichnet, daß ein auf zumindest eine Stützrolle (22) einwirkender Stützrollenantrieb (30) vorgesehen ist.

8. Sattelauflieger nach einem oder mehreren der Ansprüche 3 bis 6, dadurch gekennzeichnet, daß zur Verschiebung des Schlittens (24) eine Seilwinde (31) vorgesehen ist.

## Claims

1. A semitrailer (1) for containers (12, 13), having pairs of transverse members (14, 15; 16, 17) disposed on longitudinal frame struts (3) for the lockable end support of selectively a single container (13) or two containers (12) disposed one behind the other, characterised in that with two containers (12) arranged one behind the other on the semitrailer (1), the pair of transverse members (16, 17) supporting the rear container (12) is displaceable and locatable on the longitudinal frame struts (3) in and counter to the direction of travel (18), between a first operating position adjacent to the rear end of the semitrailer and a second operating position advanced in the direction of travel (18).

2. A semitrailer according to claim 1, characterised in that the rear transverse member (15) of the pair of transverse members (14, 15) supporting the front container (12) when two containers (12) are disposed one behind the other is associated with the movable pair of transverse members (16, 17) for joint movement therewith.

3. A semitrailer according to claim 1 or 2, characterised in that the movable transverse members (15, 16, 17) form part of a carriage (24) supported on the longitudinal frame struts (3) by means of supporting rollers (22, 23) for travel between the two operating positions.

4. A semitrailer according to claim 3, characterised in that locking members (28, 29), which come into an aligned position one above the other in both operating positions and can be connected to one another by container locking members, are provided on the longitudinal frame struts (3) and on the carriage (24).

5. A semitrailer according to claim 4, characterised in that a pair of locking members (29) is disposed in front of each of the two transverse members (16, 17) of the movable pair of transverse members, at the travel direction side thereof.

6. A semitrailer according to any one or more of claims 3 to 5, characterised in that the carriage (24) comprises longitudinal struts (25) which connect and carry the movable transverse members (15, 16, 17) and on or in which the supporting rollers (22, 23) forming a front and rear pair of rollers respectively are mounted close to the transverse members (16, 17).

7. A semitrailer according to any one or more of claims 1 to 6, characterised in that a supporting-roller drive (30) acting on at least one supporting roller (22) is provided.

8. A semitrailer according to any one or more of claims 3 to 6, characterised in that a cable winch (31) is provided to displace the carriage (24).

## Revendications

1. Semi-remorque (1) pour conteneur (12, 13) comprenant des paires de traverses (14, 15; 16, 17) montées sur des longerons (3) pour supporter aux extrémités, de manière verrouillable, soit un seul conteneur (12), soit deux conteneurs (12) disposés l'un derrière l'autre, caractérisée en ce que, lorsque deux conteneurs (12) sont disposés l'un derrière l'autre sur la semi-remorque (1), la paire de traverses (16, 17) supportant le conteneur (12) postérieur peut être déplacée sur les longerons (3) dans le sens de la marche (18) et dans le sens contraire, entre une première position de service proche de l'extrémité postérieure de la semi-remorque et une seconde position de service décalée vers l'avant dans le sens de la marche (18), et peut être fixée en place.

2. Semi-remorque suivant la revendication 1, caractérisé en ce que la traverse postérieure (15) de la paire de traverses (14, 15) qui, lorsque deux conteneurs (12) sont disposés l'un derrière l'autre sur la semi-remorque (1), supporte le conteneur (12) antérieur, est associé à la paire de traverses (16, 17) mobile de manière à se déplacer avec celle-ci.

3. Semi-remorque suivant la revendication 1 ou 2, caractérisée en ce que les traverses mobiles (15, 16, 17) font partie intégrante d'un chariot (24), qui est supporté de manière à pouvoir se déplacer entre les deux positions de service, sur des rails de guidage (21) prévus sur les longerons (3), au moyen de galets de support (22, 23).

4. Semi-remorque suivant la revendication 3, caractérisée en ce que des éléments de verrouillage (28, 29) pouvant être reliés l'un à l'autre par des organes de blocage de conteneur et parvenant respectivement en coïncidence par superposition dans les deux positions de service, sont prévus sur les longerons (3) et sur le chariot (24).

5. Semi-remorque suivant la revendication 4, caractérisée en ce que chacune des deux traverses (16, 17) de la paire de traverses mobiles est précédée, dans le sens de la marche, d'une paire d'éléments de verrouillage.

6. Semi-remorque suivant une ou plusieurs des revendications 3 à 5, caractérisée en ce que le chariot (24) comporte une entretoise longitudinale (25) qui relie et supporte les traverses mobiles (15, 16, 17) et sur ou dans laquelle les galets de support (22, 23) formant respectivement une paire de galets antérieure et une paire de galets postérieure, tourillonnent à proximité des traverses (16, 17).

7. Semi-remorque suivant une ou plusieurs des revendications 1 à 6, caractérisée en ce qu'un mécanisme d'entraînement des galets de support agissant sur au moins un galet de support (22) est prévu.

8. Semi-remorque suivant une ou plusieurs des revendications 3 à 6, caractérisée en ce qu'un treuil (31) est prévu pour déplacer le chariot (24).

Fig.1

Fig.2

Fig. 3

EP 0 217 075 B1

_Fig. 4_

Fig. 5

Fig. 6

Fig. 7

Fig. 8